# EUROPEAN PATENT APPLICATION

(11) **EP 3 096 415 A1**
(43) Date of publication of application: **23.11.2016**
(21) Application number: 15185699.4
(22) Date of filing: 17.09.2015
(51) Int. Cl.: H01R 31/06, H02J 7/00

(54) **COMBINED ELECTRONIC DEVICE**

(30) Priority: 21.05.2015 TW 104116209
(71) Applicant: Delta Electronics, Inc., Taoyuan County 33341 (TW)
(72) Inventor: HSIEH, Hung-Sheng, 33341 Taoyuan City (TW)
(74) Representative: Zimmermann, Tankred Klaus

(57) **Abstract**

A combined electronic device (D1) comprises a first electronic device (1) and a first power storage device (2). The first electronic device comprises a first connector (C1). The first power storage device comprises a second connector (C2) and a third connector (C3). The second connector is able to be electrically connected with the first connector so that the first electronic device receives the power provided by the first power storage device. The third connector is able to be electrically connected with a fourth connector of a second power storage device so that the first electronic device receives the power provided by the second power storage device.

## Description

### BACKGROUND OF THE INVENTION

### Field of Invention

This invention relates to a combined electronic device.

### Related Art

In this era that the portable electronic devices are vigorously developed, most people may own several portable electronic devices at the same time, such as a cell phone, a tablet computer, a camera or a dashcam. When these electronic devices are used for a long time, they need to be charged again due to the nearly exhausted power. However, when the user is outside, finding a socket for charging the electronic device is really difficult.

Although the power bank has been presented to solve the above problem in the current technology, the power of the power bank will also be exhausted very soon when the electronic device is operated for a period of time by the power of the power bank. This is because the power capacity of the conventional power bank is fixed. Therefore, the electronic device still encounters the problem of no power source.

### SUMMARY OF THE INVENTION

In view of the foregoing subject, an objective of the invention is to provide a combined electronic device whereby the power capacity of the external power provided for the electronic device can be extended or changed according to the practical requirement.

To achieve the above objective, a combined electronic device according to the invention comprises a first electronic device and a first power storage device. The first electronic device comprises a first connector. The first power storage device comprises a second connector and a third connector. The second connector is able to be electrically connected with the first connector so that the first electronic device receives the power provided by the first power storage device. The third connector is able to be electrically connected with a fourth connector of a second power storage device so that the first electronic device receives the power provided by the second power storage device.

In one embodiment, the first electronic device is a wireless network sharing device.

In one embodiment, the first electronic device is a power sharing device comprising a plurality of power sharing ports.

In one embodiment, the first electronic device is a power adaptor.

In one embodiment, the first electronic device comprises a fifth connector which is able to be electrically connected with a second electronic device, so that the second electronic device receives the power provided by the first power storage device and by the second power storage device.

In one embodiment, the second electronic device is power sharing device comprising a plurality of power sharing ports.

In one embodiment, the second electronic device is a power adaptor.

To achieve the above objective, a combined electronic device according to the invention comprises a first electronic device, a first power storage device and a second power storage device. The first electronic device comprises a first connector. Each of two ends of the first power storage device comprises a second connector. Each of two ends of the second power storage device comprises a third connector. The first connector, the second connector and the third connector are able to be electrically connected with each other, so that the first electronic device receives the power provided by the first power storage device and by the second power storage device.

In one embodiment, the first electronic device is a wireless network sharing device.

In one embodiment, the first electronic device is a power sharing device comprising a plurality of power sharing ports.

In one embodiment, the first electronic device is a power adaptor.

In one embodiment, the first electronic device comprises another connector which is able to be electrically connected with a second electronic device, so that the second electronic device receives the power provided by the first power storage device and by the second power storage device.

In one embodiment, the second electronic device is power sharing device comprising a plurality of power sharing ports.

In one embodiment, the second electronic device is a power adaptor.

To achieve the above objective, a combined electronic device according to the invention comprises a first electronic device and a first power storage device. The first power storage device is able to be electrically connected with the first electronic device by a connector, so that the first electronic device receives the power provided by the first power storage device. The first power storage device is able to be electrically connected with a second power storage device by a connector, so that the first electronic device receives the power provided by the second power storage device.

In one embodiment, the first electronic device is a wireless network sharing device.

In one embodiment, the first electronic device is a power sharing device comprising a plurality of power sharing ports.

In one embodiment, the first electronic device is a power adaptor.

In one embodiment, the first electronic device is able to be electrically connected with a second electronic device, so that the second electronic device receives the power provided by the first power storage device and by the second power storage device.

In one embodiment, the second electronic device is power sharing device comprising a plurality of power sharing ports.

As mentioned above, in the combined electronic device of this invention, the first electronic device and the first power storage device can be electrically connected with each other by the connector, so the stored power of the first power storage device can be provided for the first electronic device as the power source of the first electronic device during the operation. Besides, the first power storage device can be further electrically connected with the second power storage device by another connector. Therefore, the stored power of the first power storage device and the stored power of the second power storage device can be both provided for the first electronic device. That is, the power capacity of the external power provided for the first electronic device won't be limited to the power storage capacity of the first power storage device and can be extended or changed according to the practical requirement.

### BRIEF DESCRIPTION OF THE DRAWINGS

The invention will become more fully understood from the detailed description and accompanying drawings, which are given for illustration only, and thus are not limitative of the present invention, and wherein:
FIGS. 1A to 1D are schematic diagrams of the combined electronic devices of different embodiments of the invention;
FIGS. 2A and 2B are schematic diagrams of the combined electronics device of different embodiments of the invention; and
FIGS. 3A and 3B are schematic diagrams of the combined electronics device of different embodiments of the invention.

### DETAILED DESCRIPTION OF THE INVENTION

The present invention will be apparent from the following detailed description, which proceeds with reference to the accompanying drawings, wherein the same references relate to the same elements.

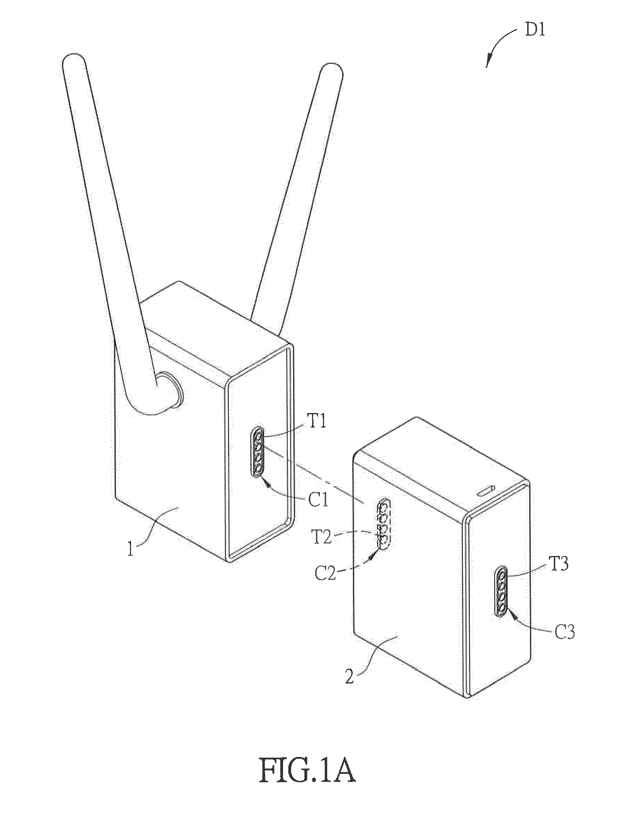

FIGS. 1A to 1D are schematic diagrams of the combined electronic devices of different embodiments of the invention. As shown in FIG. 1A, the combined electronic device D1 comprises a first electronic device 1 and a first power storage device 2. In this embodiment, the first electronic device 1 is illustrated as a wireless network sharing device for example. However, this invention is not limited thereto. The first power storage device 2 is illustrated as a power bank for example.

The first electronic device 1 and the first power storage device 2 can be electrically connected together by the connector, so that the first electronic device 1 receives the power provided by the first power storage device 2. In detail, the first electronic device 1 comprises a first connector C1 and the first connector C1 can comprise at least one first terminal T1. Herein, the first connector C1 comprises four first terminals T1 for example. Likewise, the first power storage device 2 comprises a second connector C2 and the second connector C2 comprises at least one second terminal T2. The first connector C1 and the second connector C2 can connect to each other, so that the second terminal T2 can be electrically connected with the first terminal T1. When the second terminal T2 and the first terminal T1 are electrically connected together, the first power storage device 2 can provide the stored power for the first electronic device 1 as the power source of the first electronic device 1 during the normal operation.

To be noted, the terminal mentioned above or hereinafter can be a connecting pad or a contacting element (e.g. a plastic chip or a spring contact) for example instead of a general signal cable. In this embodiment, the first terminal T1 and the second terminal T2 can be disposed correspondingly. Herein, the said corresponding disposition refers to that the locations of the first terminal T1 and the second terminal T2 correspond to each other and the types of the first terminal T1 and the second terminal T2 also correspond to each other (e.g. a male/female pairing), so that the first terminal T1 and the second terminal T2 can be connected correspondingly. In some embodiments, the first terminal T1 and the second terminal T2 may be not a male/female pairing in type, and their types may be the same if only an electrical connection can be formed between them.

Moreover, because the power transmission path between the first electronic device 1 and the first power storage device 2 is formed by the connector and the power or signal is transmitted by the physical contact of the terminals, this embodiment is different from the conventional wireless charging technology. Furthermore, because the connector of this embodiment is embedded in the electronic device and the connection is not achieved by an additional cable, this embodiment is not the conventional wired charging technology either.

In order to limit the relative movement between the first electronic device 1 and the first power storage device 2, the first electronic device 1 and the first power storage device 2 can be fixed with each other by a magnetic force. In some embodiments, the first electronic device 1 and the first power storage device 2 can be fixed with each other by a hook structure or other fixing structures.

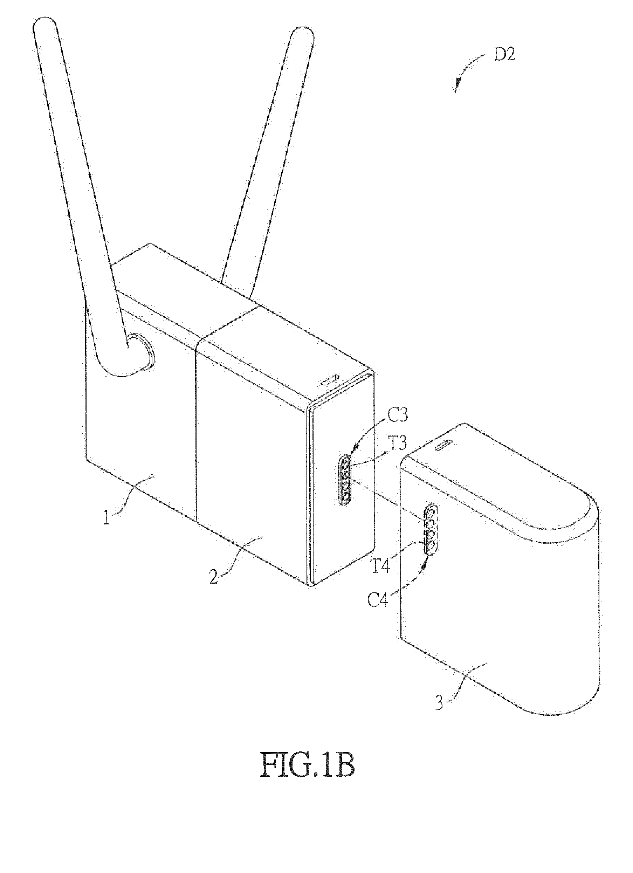

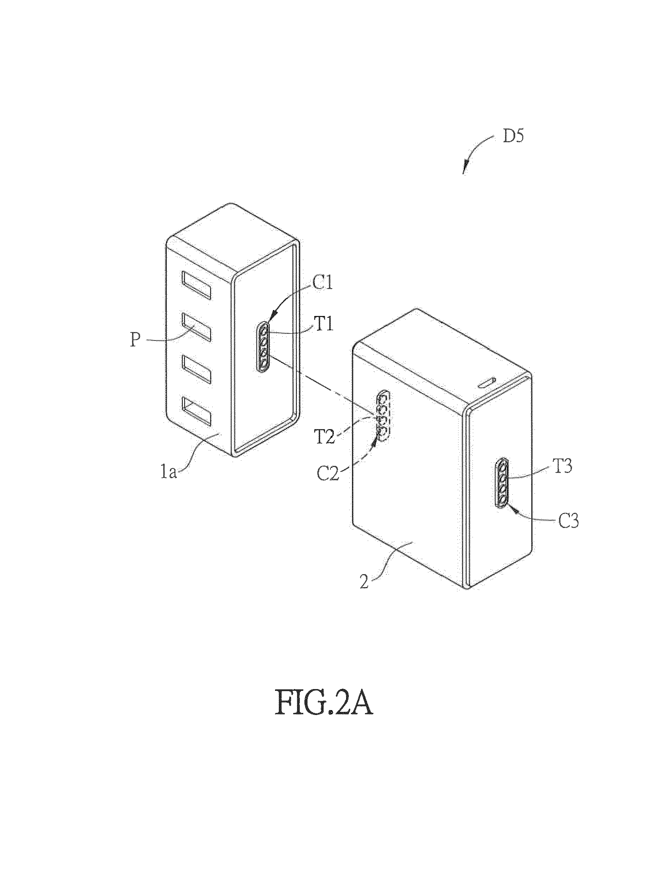

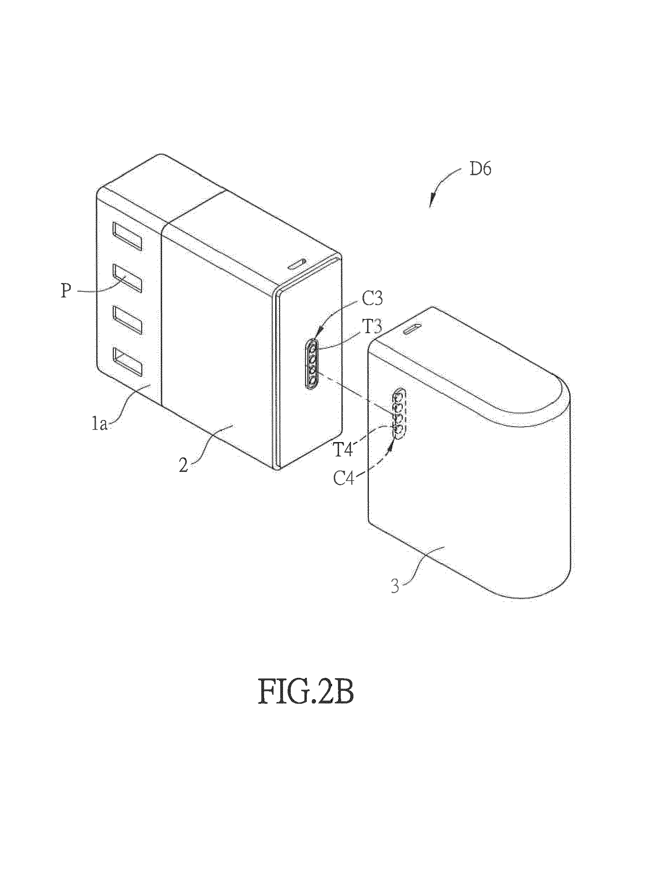

When the first electronic device 1 is electrically connected with the first power storage device 2 by the connector, the first power storage device 2 also can be electrically connected with a second power storage device 3 by other connectors, as shown in FIG. 1B (the combined electronic device D2). As shown in FIGS. 2A and 2B, in detail, the first power storage device 2 further comprises a third connector C3 in addition to the second connector C2. The third connector C3 and the second connector C2 can be disposed on the opposite sides of the first power storage device 2, and they may be respectively disposed on the adjacent two sides of the first power storage device 2 in other embodiments. The third connector C3 can comprise at least one third terminal T3, and the third terminal T3 can be electrically connected with the fourth terminal T4 of the fourth connector C4 of the second power storage device 3. When the first electronic device 1 is electrically connected with the first power storage device 2 and the third terminal T3 is electrically connected with the fourth terminal T4, the stored power of the first power storage device 2 and the stored power of the second power storage device 3 can be provided for the first electronic device 1 as the power source of the first electronic device 1 during the normal operation.

Likewise, the third terminal T3 and the fourth terminal T4 can be disposed correspondingly. The first power storage device 2 and the second power storage device 3 can be fixed with each other by a magnetic force, a hook structure or other fixing methods. The illustration of the corresponding disposition can be comprehended by referring to the above description, and the related illustration is omitted here for conciseness.

In this embodiment, the first power storage device 2 and the second power storage device 3 are illustrated as a power bank each for example. Because the first power storage device 2 and the second power storage device 3 can store power, they are not general power adaptors. Moreover, to be noted, the power storage capacity of the first power storage device 2 can be larger than that of the second power storage device 3. In some embodiments, the power storage capacity of the first power storage device 2 may be less than or equal to that of the second power storage device 3.

In application, the user can carry the first electronic device 1 (such as a wireless network sharing device), the first power storage device 2 and the second power storage device 3 to the outside at the same time. When the user wants to implement the wireless network sharing, the user can connect the first electronic device 1 with the first power storage device 2 so that the first power storage device 2 can act as the power source of the first electronic device 1, or can, according to the requirement, connect the first electronic device 1 with the first power storage device 2 and the second power storage device 3 sequentially, so that the two power storage devices can act as the power sources of the wireless network sharing device at the same time. Therefore, the first electronic device 1 can implement the wireless network sharing, and the power capacity of the external power source of the first electronic device 1 can be extended or changed according to the practical requirement.

To be noted, although each of the electronic devices and each of the power storage devices are connected one by one, the circuit therebetween is a parallel connection. That is, no matter how many power storage devices are connected, the provided voltage is fixed but the provided current is increased. Therefore, the speed of charging the electronic device can be accelerated and the electronic device won't be damaged due to the raised voltage. Besides, the electronic devices are connected by a parallel connection, so the power storage devices can provide the power for the multiple electronic devices at the same time.

To be noted, although the second power storage device 3 of this embodiment only comprises a fourth connector C4 for example, the second power storage device 3 may comprise other connectors in other embodiments. The second power storage device 3 can be further electrically connected with the third power storage device (not shown) by the terminals of other connectors. Therefore, the power capacity provided for the first electronic device 1 (from the first second power storage device 2, the second power storage device 3 and the third power storage device) can be increased.

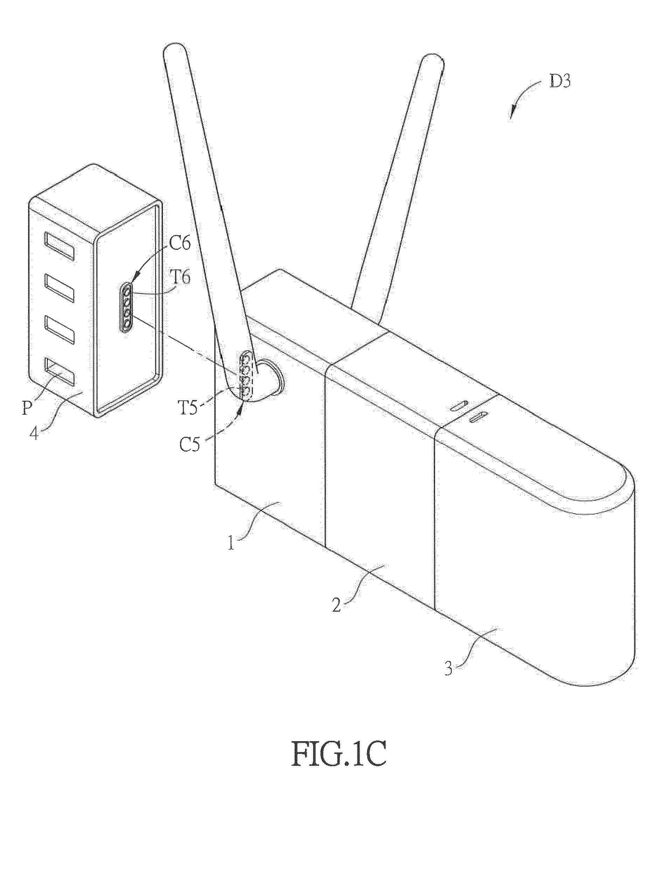

As shown in FIG. 1C (the combined electronic device D3), the first electronic device 1 can further comprise a fifth connector C5, and the fifth connector C5 can comprise at least one fifth terminal T5. The fifth terminal T5 and the first terminal T1 (FIG. 1A) can be disposed on the opposite sides of the first electronic device 1, and they may be respectively disposed on the adjacent two sides of the first electronic device 1 in other embodiments. The fifth terminal T5 of the fifth connector C5 can be electrically connected with second electronic device 4, so that the second electronic device 4 also can receive the power provided by the first power storage device 2 and by the second power storage device 3. In detail, the second electronic device 4 can comprise a sixth connector C6, and the sixth connector C6 can comprise at least one sixth terminal T6. The sixth terminal T6 can be electrically connected with the fifth terminal T5. When the second electronic device 4, the first electronic device 1, the first power storage device 2 and the second power storage device 3 are sequentially connected one by one, the stored power of the first power storage device 2 and the stored power of the second power storage device 3 can be provided not only for the first electronic device 1 but also for the second electronic device 4 as the power source of the second electronic device 4.

Likewise, the fifth terminal T5 and the sixth terminal T6 can be disposed correspondingly. The first electronic 1 and the second electronic device 4 can be fixed with each other by a magnetic force, a hook structure or other fixing methods. The illustration of the corresponding disposition can be comprehended by referring to the above description, and the related illustration is omitted here for conciseness.

In this embodiment, the second electronic device 4 is illustrated as a power sharing device for example. The power sharing device comprises a plurality of power sharing ports P, each of which can be a USB (Universal Serial Bus) port or the port of another type. When the second electronic device 4, the first electronic device 1, the first power storage device 2 and the second power storage device 3 are sequentially connected one by one and another electronic device is connected to the power sharing port P by a USB plug, the another electronic device can receive the stored power of the first power storage device 2 or the stored power of the second power storage device 3. Because the second electronic device 4 comprises a plurality of power sharing ports P, the first power storage device 2 and the second power storage device 3 can provide the power for the multiple electronic devices at the same time, so as to achieve the power sharing purpose.

To be noted, although the first electronic device 1 and the second electronic device 4 are different types (the wireless network sharing device and the power sharing device) in this embodiment, they may be the same type in other embodiments. Herein, the same type refers to that they have the same function. For example, both of them have the wireless network sharing function or the power sharing function.

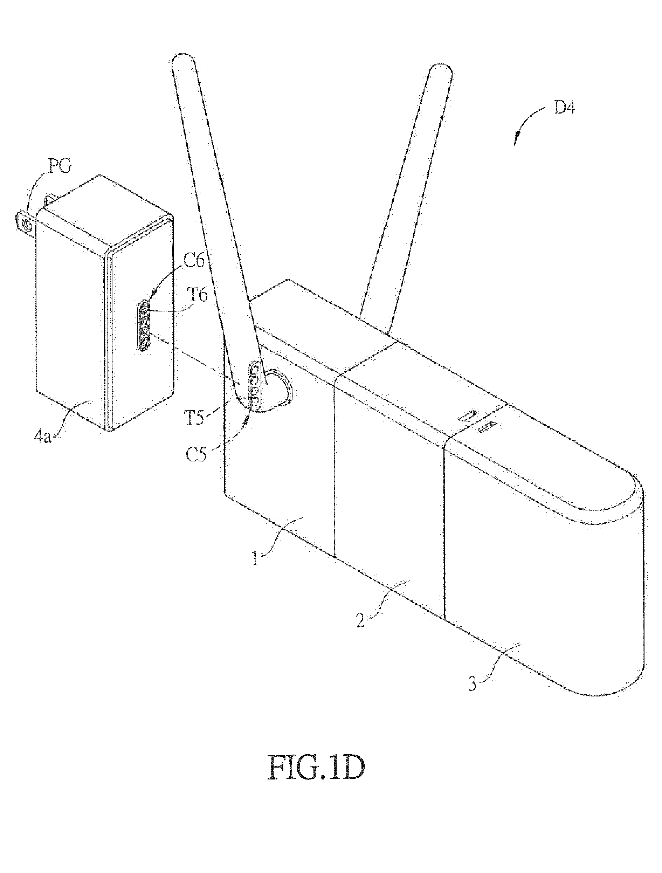

The difference between the combined electronic device D4 of FIG. 1D and the combined electronic device D3 of FIG. 1C is that the second electronic device 4a of the combined electronic device D4 is a power adaptor. The power adaptor has functions of voltage transformation and AC/DC conversion. When the plug PG of the second electronic device 4a is inserted into the corresponding socket and the first electronic device 1 is electrically connected with the second electronic device 4a, the first electronic device 1 can receive the power from the socket.

Although the plug PG is illustrated as a power plug of NEMA 1-15 standard in this embodiment for example, it may be the power plug of another standard in other embodiments.

FIGS. 2A and 2B are schematic diagrams of the combined electronics device of different embodiments of the invention. As shown in FIG. 2A, the difference between the combined electronic device D5 of FIG. 2A and the combined electronic device D1 of FIG. 1A is that the first electronic device 1 of FIG. 1A is illustrated as a wireless network sharing device and the first electronic device 1a of FIG. 2A is illustrated as a power sharing device. The power sharing device comprises a plurality of power sharing ports P. When the first connector C1 of the first electronic device 1a is electrically connected with the second connector C2 of the first power storage device 2 and another electronic device is connected to the power sharing port P by a USB plug, the another electronic device can receive the stored power of the first power storage device 2 through the first electronic device 1a for the normal operation. Therefore, the combined electronic device D5 can achieve the power sharing function.

Moreover, when the first electronic device 1a is electrically connected with the first power storage device 2 by the connector as shown in FIG. 2B, the third connector C3 of the first power storage device 2 can be electrically connected with the fourth connector C4 of the second power storage device 3. Therefore, the power capacity provided for the first electronic device 1a (the power sharing device) can be increased.

In other embodiments, in addition to the first connector C1 (FIG. 2A), the first electronic device 1a can further comprise a fifth connector (now shown). Therefore, the first electronic device 1a can be further electrically connected with a second electronic device (not shown) by the fifth terminal of the fifth connector.

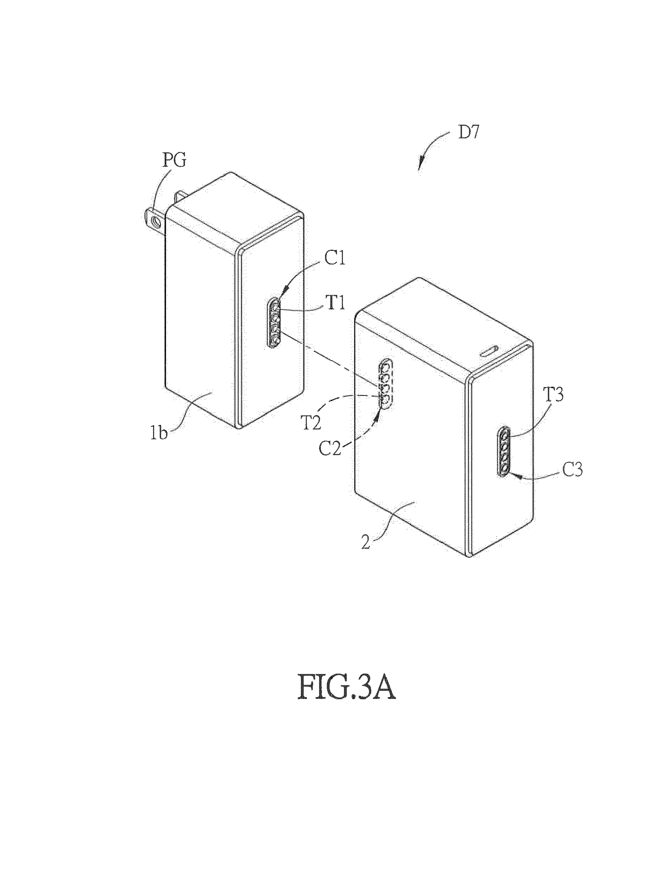

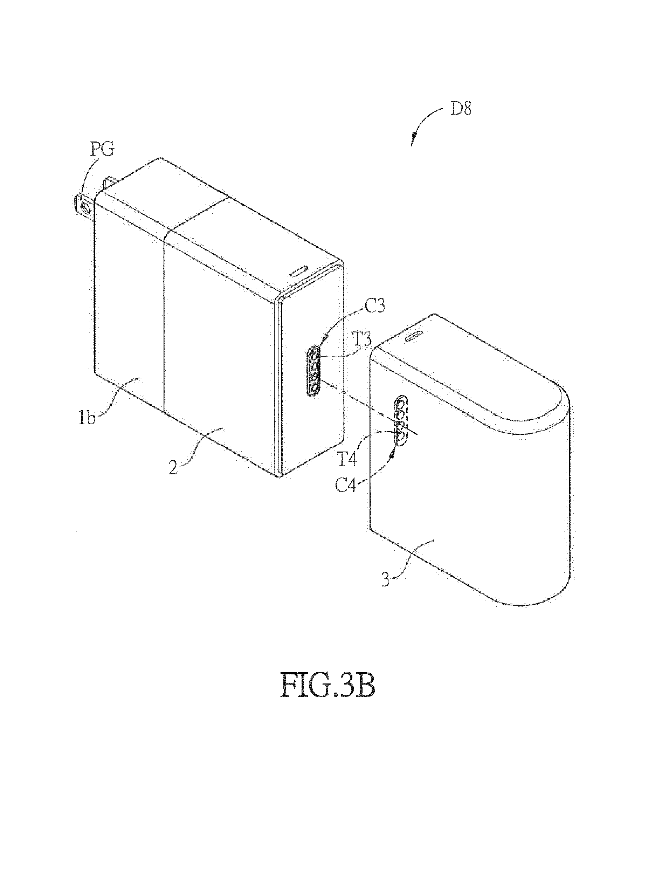

FIGS. 3A and 3B are schematic diagrams of the combined electronics device of different embodiments of the invention. As shown in FIG. 3B, the difference between the combined electronic device D7 of FIG. 3A and the combined electronic device D1 of FIG. 1A is that the first electronic device 1 is a wireless network sharing device for example and the first electronic device 1b of FIG. 3A is a power adaptor for example. When the first connector C1 of the first electronic device 1b is electrically connected with the second connector C2 of the first power storage device 2 and the plug PG of the first electronic device 1b is inserted into the corresponding socket, the power from the socket can charge the first power storage device 2 through the power adaptor.

Moreover, the third connector C3 of the first power storage device 2 can be electrically connected with the fourth connector C4 of the second power storage device 3, as shown in FIG. 3B (the combined electronic device D8). Therefore, when the first electronic device 1b, the first power storage device 2 and the second power storage device 3 are sequentially connected and the plug PG of the first electronic device 1b is inserted into the corresponding socket, the power from the socket can charge the first power storage device 2 and the second power storage device 3 at the same time.

To be noted, the above-mentioned devices can be operated in a hot plugging manner, a quick release manner and a plug-and-play manner, so as to bring considerable convenience.

In addition, this invention further discloses another combined electronic device, which comprises a first electronic device, a first power storage device and a second power storage device. The first electronic device comprises a first connector, each of two ends of the first power storage device comprises a second connector, and each of two ends of the second power storage device comprises a third connector. The first connector, the second connector and the third connector can be electrically connected with each other, so that the first electronic device receives the power provided by the first power storage device and by the second power storage device. In one embodiment, the first electronic device comprises another first connector which can be electrically connected with a second electronic device, so that the second electronic device receives the power provided by the first power storage device and by the second power storage device. The technical features and the mutual connection relationship of the above-mentioned first electronic device, first power storage device and second power storage device can be comprehended by referring to the above embodiments, so the related illustrations are omitted here for conciseness.

To be noted, the variations of the elements, components or devices in the all embodiments can be implemented separately or in combination, and this invention is not limited to the above-mentioned embodiments.

Summarily, in the combined electronic device of this invention, the first electronic device and the first power storage device can be electrically connected with each other by the connector, so the stored power of the first power storage device can be provided for the first electronic device as the power source of the first electronic device during the operation. Besides, the first power storage device can be further electrically connected with the second power storage device by another connector. Therefore, the stored power of the first power storage device and the stored power of the second power storage device can be both provided for the first electronic device. That is, the power capacity of the external power provided for the first electronic device won't be limited to the power storage capacity of the first power storage device and can be extended or changed according to the practical requirement.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A combined electronic device, comprising:
a first electronic device comprising a first connector; and
a first power storage device comprising a second connector and a third connector,
wherein the second connector is able to be electrically connected with the first connector so that the first electronic device receives the power provided by the first power storage device, and the third connector is able to be electrically connected with a fourth connector of a second power storage device so that the first electronic device receives the power provided by the second power storage device.

2. The combined electronic device as recited in claim 1, wherein the first electronic device is a wireless network sharing device.

3. The combined electronic device as recited in claim 1, wherein the first electronic device is a power sharing device comprising a plurality of power sharing ports.

4. The combined electronic device as recited in claim 1, wherein the first electronic device is a power adaptor.

5. The combined electronic device as recited in claim 1, wherein the first electronic device comprises a fifth connector which is able to be electrically connected with a second electronic device, so that the second electronic device receives the power provided by the first power storage device and by the second power storage device.

6. The combined electronic device as recited in claim 5, wherein the second electronic device is power sharing device comprising a plurality of power sharing ports.

7. The combined electronic device as recited in claim 5, wherein the second electronic device is a power adaptor.

8. A combined electronic device, comprising:
a first electronic device comprising a first connector;
a first power storage device, each of two ends of which comprises a second connector; and
a second power storage device, each of two ends of which comprises a third connector,
wherein the first connector, the second connector and the third connector are able to be electrically connected with each other, so that the first electronic device receives the power provided by the first power storage device and by the second power storage device.

9. The combined electronic device as recited in claim 8, wherein the first electronic device is a wireless network sharing device, or a power sharing device comprising a plurality of power sharing ports, or a power adaptor.

10. The combined electronic device as recited in claim 8, wherein the first electronic device comprises another connector which is able to be electrically connected with a second electronic device, so that the second electronic device receives the power provided by the first power storage device and by the second power storage device.

11. The combined electronic device as recited in claim 10, wherein the second electronic device is power sharing device comprising a plurality of power sharing ports, or a power adaptor.

12. A combined electronic device, comprising:
a first electronic device; and
a first power storage device,
wherein the first power storage device is able to be electrically connected with the first electronic device by a connector, so that the first electronic device receives the power provided by the first power storage device, and the first power storage device is able to be electrically connected with a second power storage device by a connector, so that the first electronic device receives the power provided by the second power storage device.

13. The combined electronic device as recited in claim 12, wherein the first electronic device is a wireless network sharing device, or a power sharing device comprising a plurality of power sharing ports, or a power adaptor.

14. The combined electronic device as recited in claim 12, wherein the first electronic device is electrically connected with a second electronic device, so that the second electronic device receives the power provided by the first power storage device and by the second power storage device.

15. The combined electronic device as recited in claim 14, wherein the second electronic device is power sharing device comprising a plurality of power sharing ports.
